# EUROPEAN PATENT SPECIFICATION

(11) **EP 4 324 774 B1**
(45) Date of publication and mention of the grant of the patent: **08.04.2026**
(21) Application number: 22190435.2
(22) Date of filing: 15.08.2022
(51) Int. Cl.: B66B 1/30

(54) **CONVEYANCE SYSTEM WITH REGENERATIVE DRIVE**
FÖRDERSYSTEM MIT REGENERATIVEM ANTRIEB
SYSTÈME DE TRANSPORT AVEC ENTRAÎNEMENT RÉGÉNÉRATIF

(43) Date of publication of application: 21.02.2024
(73) Proprietor: OTIS Elevator Company, Farmington, CT 06032 (US)
(72) Inventor: Gleßner, Stephan, 13507 Berlin (DE)
(74) Representative: Dehns

(56) References cited:
- WO-A1-98/25849
- US-A1- 2014 116 810
- US-A1- 2020 131 004

## Description

### Technical field

This invention relates to a conveyance system including a regenerative drive, to a method of operating a regenerative drive of a conveyance system and to a software product.

### Background

It is known to provide regenerative drives to convert mechanical energy of a machine (e.g., a rotary motor) and a connected load into electrical energy, which is returned to an electrical power source under braking conditions. Regenerative drives can be used in conveyance systems, such as elevator systems, during braking of an elevator car.

US2014/0116810A1 discloses a method of running an elevator system in both passenger operation mode and a renewable energy mode.

### Summary

According to a first aspect of this invention there is provided a conveyance system, as claimed in claim 1.

According to a second aspect of this invention there is provided a method of operating a regenerative drive of a conveyance system, as claimed in claim 8.

According to a third aspect of the present invention there is provided a software product as claimed in claim 10.

Aspects of the present invention relate to operating a regenerative drive of a conveyance system in combination with an energy harvesting device, such as a solar panel or wind turbine, which allows energy to be extracted from the external environment as well.

By providing an energy harvesting device which can be switched between a first condition, disconnected from the machine control circuit of a regenerative drive, and a second connection in which it is connected to the machine control circuit, it is possible to selectively connect the energy harvesting device to the regenerative drive, and thereby to selectively use circuitry (i.e., the second plurality of switching devices of the machine control circuit) from the regenerative drive for the purpose of drawing power from the energy harvesting device. The machine control circuit helps to allow control of the energy being harvested from the energy harvesting device. This avoids the need to provide an entirely separate set of circuitry for the purpose of drawing power from the energy harvesting device. This can improve the energy efficiency of the conveyance system and could reduce the cost of the conveyance system, since fewer components are required than if separate circuitry is provided to the energy harvesting device.

The machine control circuit may be a bi-directional machine control circuit. It may be a full-bridge circuit.

The machine is an alternating current (AC) machine, e.g. an AC motor. The machine control circuit is an inverter (e.g., a three-phase full bridge circuit). The energy harvesting device may be operatively connected to at least one phase of the inverter of the regenerative drive. The second plurality of switching devices may be in selective communication with each phase of the machine. By being in selective communication with each phase of the machine, the energy harvesting device may thereby be in selective communication with each terminal of the machine, since each terminal may correspond to a phase of the machine.

In some examples, the switching arrangement is arranged between a positive pole of the energy harvesting device and the machine control circuit. In some examples, the switching arrangement is a first switching arrangement and the conveyance system further comprises a second switching arrangement, wherein the second switching arrangement is arranged between the energy harvesting device and the DC bus. The second switching arrangement may be arranged between a negative pole of the energy harvesting device and the DC bus. The first switching arrangement and the second switching arrangement may be controlled to switch together.

In some examples, the conveyance system further comprises a switching controller. The switching controller may be arranged to control the switching arrangement (optionally both the first switching arrangement and the second switching arrangement) to switch between the first condition and the second condition. In other words, the switching controller may be responsible for connecting and disconnecting the energy harvesting device from the regenerative drive circuitry. It will therefore be understood that in some examples of the method referred to above, the method step of switching the switching arrangement from the first condition to the second condition may be carried out by a switching controller.

In some examples, the switching controller is arranged to switch the switching arrangement to the second condition when the machine is stationary. Similarly, the method step of switching the switching arrangement from the first condition to the second condition may be carried out when the machine is stationary. It will be understood that when the machine is stationary it is not acting to move a load (i.e., the conveyance apparatus). This may mean that the conveyance apparatus of the conveyance system is stationary, or may mean that it is being moved by other means. When the machine is stationary the regenerative drive is not being used either to supply power or to harvest power from the machine, and it is therefore available to be used to draw power from the energy harvesting device, without interfering with movement of the conveyance apparatus.

The switching controller may be arranged to switch the switching arrangement to the second condition whenever the machine is stationary (i.e., for any length of time whatsoever), but it may be preferable that the switching arrangement is only switched to the second condition (with the energy harvesting device connected) when the conditions of the conveyance system are such that the machine is known, expected, or likely to be stationary for a reasonable period of time (e.g., more than a threshold amount). This can be achieved in a number of ways.

In some examples the switching controller is arranged to switch the switching arrangement to the second condition when the machine has finished a conveying operation. Thus if the conveyance system is an elevator system, the switching arrangement may switch when an elevator car run comes to an end (i.e., when the last passenger leaves the elevator car, the doors have been closed, and there are no outstanding calls waiting to be served by that elevator car), since then the machine moving that elevator car has finished that conveying operation (and since the doors are closed no releveling operation, which also uses the machine control circuit, can be in progress). The switching controller may be arranged to switch the switching arrangement to the second condition when the conveyance apparatus moved by the machine has no outstanding run commands (i.e., at that time there is no further known demand for that conveyance apparatus, for example an elevator car that has no calls). In some examples, the switching controller is arranged to switch the switching arrangement to the second condition when the conveyance apparatus of the conveyance system (or the whole conveyance system) has moved into an idle mode of operation. Similarly, the method may comprise switching the switching arrangement to the second condition when one or more of these conditions holds.

The switching controller may also be arranged to switch the switching arrangement to the second condition even where further movement of the machine is already planned/expected. Thus in some examples, in addition, or alternatively to those mentioned above, the switching controller is arranged to switch the switching arrangement to the second condition when an expected stationary time of the machine is known, provided that the expected stationary time is above a threshold amount of time. Thus some power can still be drawn from the energy harvesting device, even when it is known that the machine is going to move again soon (e.g., to obey a further run command) provided that the length of stop that is anticipated is sufficiently long to make the switching worthwhile. Similarly, the method may comprise switching the switching arrangement when an expected stationary time of the machine is known, provided that the expected stationary time is above a threshold amount of time.

Alternatively, the switching controller may have no access to, or knowledge of, the anticipated movement of the machine. In this case the switching controller may instead base its switching on a detected current idle time of the machine. Thus, in some examples, the switching controller is arranged to switch the switching arrangement to the second condition once the machine has been stationary for more than a threshold amount of time. The threshold amount of time may be long enough to account for a standard stationary time of the conveyance apparatus, e.g., for the opening of elevator car doors, such that once this threshold amount of time is exceeded it can be assumed that the conveyance apparatus has no outstanding commands and is idling, and that therefore the machine will remain stationary for the time being. This allows operation of the switching arrangement to be achieved even without knowledge of the expected action of the conveyance apparatus and therefore of the machine. Similarly, the method may further comprise detecting a stationary time of the machine, and, once the machine has been stationary for more than a threshold amount of time, switching the switching arrangement to the second condition.

The conveyance system may further comprise a main conveyance system controller. It will be understood that the main conveyance system controller is the controller which manages operation of the overall conveyance system, and ensures the system responds to travel commands.

The conveyance system may further comprise a drive controller, wherein the drive controller is arranged to control switching of the first plurality of switching devices and the second plurality of switching devices so as to control the machine.

In some examples the switching controller is an independent controller, arranged to receive a signal e.g., from the main conveyance system controller or the drive controller, indicating when the conveyance system will be stationary.

In other examples the main conveyance system controller comprises the switching controller (i.e., the main conveyance system controller provides the switching controller). In further other examples the drive controller comprises the switching controller (i.e., the switching controller may be comprised in the drive controller, or in other words the drive controller provides the switching controller).

It will be understood that the (e.g., first) switching arrangement may be directly connected between the machine control circuit and the energy harvesting device, or that there may be other intermediate components present. For example, the switching arrangement may be connected between the machine and the energy harvesting device. As described above, the machine is connected to the machine control circuit, and therefore this arrangement results in the energy harvesting device being connectable to the machine control circuit.

The machine comprises a star point, at which all phases of the machine meet, wherein the star point is arranged to be accessible from an exterior of the machine, and wherein the switching arrangement is connected to the star point. Arranging the star point so as to be accessible from an exterior of the machine allows the energy harvesting device to be connected to the machine in a convenient manner, and can make it easier to connect the energy harvesting device to the machine after installation of the machine, or to swap out the energy harvesting device after initial installation. Connecting the energy harvesting device to the inverter via the machine is particularly beneficial since the machine already comprises inductors, which help to control the current flowing from the energy harvesting device, and therefore there is no benefit in providing additional inductors for the energy harvesting device.

In some examples the switching arrangement is a mechanical switch or an electromechanical switch, e.g., a magnetic contact. Such switches would enable switching between the first condition and the second condition in as little as a few 100 ms. It may then be possible to reach the maximum power point of the energy harvesting device in a few ms. Therefore, the maximum available power could be drawn from the energy harvesting device in less than 1 second after the switching arrangement begins the switching process.

In some examples, the conveyance system further comprises a battery connected to the DC bus. It will be understood that the battery is therefore arranged to store energy that has been harvested from the energy harvesting device, and passed through the machine control circuit. In some examples, the battery is also arranged to store energy that is re-generated from the machine during braking of motion of the machine. The provision of a battery allows the harvested and/or re-generated energy to be stored for use at a convenient later time, for example in the event of a failure of the AC power supply.

Similarly, in some examples, the method further comprises:
transferring power harvested from the energy harvesting device (e.g., when the machine is stationary) to the AC power source, through the converter; and/or
transferring power harvested from the energy harvesting device (e.g., when the machine is stationary) to a battery connected to the DC bus.

In some examples, the method further comprises:
returning power re-generated by motion of the machine being braked to the AC power source, through the converter; and/or
returning power re-generated by motion of the machine being braked to a battery connected to the DC bus.

In some examples, the conveyance system further comprises a voltage measurement device, connected to the energy harvesting device and arranged to measure the voltage produced by the energy harvesting device. Measuring the voltage produced by the energy harvesting device allows maximum power point tracking to be used in order to harvest a greater amount of power from the energy harvesting device. Similarly, in some examples, the method further comprises measuring, using a voltage measurement device connected to the energy harvesting device, the voltage produced by the energy harvesting device.

The conveyance system may be a passenger conveyance system. In some examples, the conveyance system is an elevator system. In this case, the conveyance apparatus is an elevator car. In other examples, the conveyance system may be an escalator, moving walkway, or trolley. In such examples, the conveyance apparatus may be a moving belt or steps.

The machine can be a motor, e.g., a linear induction motor, which may be arranged to directly convey the conveyance apparatus. Alternatively, in some examples, the machine is a rotary motor. The conveyance system may comprise tension members, wherein the tension members are connected between the machine and the conveyance apparatus. The machine may be arranged to drive the tension members.

The conveyance apparatus may be installed within a building. Thus, according to a fourth aspect of this invention, there is provided a building, comprising the conveyance system as described herein above and below, wherein the building is a residential building, or an office building, or a commercial building.

It will be understood that the energy harvesting device is a device that is capable of harvesting energy from the external environment, i.e., it is an environmental energy harvesting device. Thus it will be understood that a machine connected to a regenerative drive is not an energy harvesting device, even though energy can be returned from the machine, since the energy obtained by regeneration is not harvested from the external environment. The energy harvesting device may be a photovoltaic cell (e.g., a solar panel), a wind harvesting device (e.g., a wind turbine), a tidal power harvesting device, a thermal power harvesting device, or any other suitable device capable of harvesting power from the external environment. In some examples the energy harvesting device produces DC current.

It will be understood that any of the features described herein above with reference to the conveyance system may apply equally to the method described above, and vice versa.

### Detailed description

Certain preferred examples of this invention will now be described, by way of example only, with reference to the accompanying drawings, in which:
Figure 1 is a schematic drawing showing a building containing a conveyance system according to a first example of a first aspect of the present invention;
Figure 2 is a schematic drawing showing the regenerative drive of Figure 1 and its associated components in greater detail;
Figure 3 is a schematic drawing showing a conveyance system which is not in accordance with the claimed invention but which is included for explanatory purposes;
Figure 4 is a schematic drawing showing the regenerative drive of Figure 3 and its associated components in greater detail;
Figure 5 is a schematic drawing showing a regenerative drive and its associated components which is not in accordance with the claimed invention but which is included for explanatory purposes;
Figure 6 is a schematic drawing showing a regenerative drive and its associated components which is not in accordance with the claimed invention but which is included for explanatory purposes;
Figure 7 is a schematic drawing showing a regenerative drive and its associated components which is not in accordance with the claimed invention but which is included for explanatory purposes; and
Figure 8 is a flow diagram showing a method according to a second aspect of the present invention.

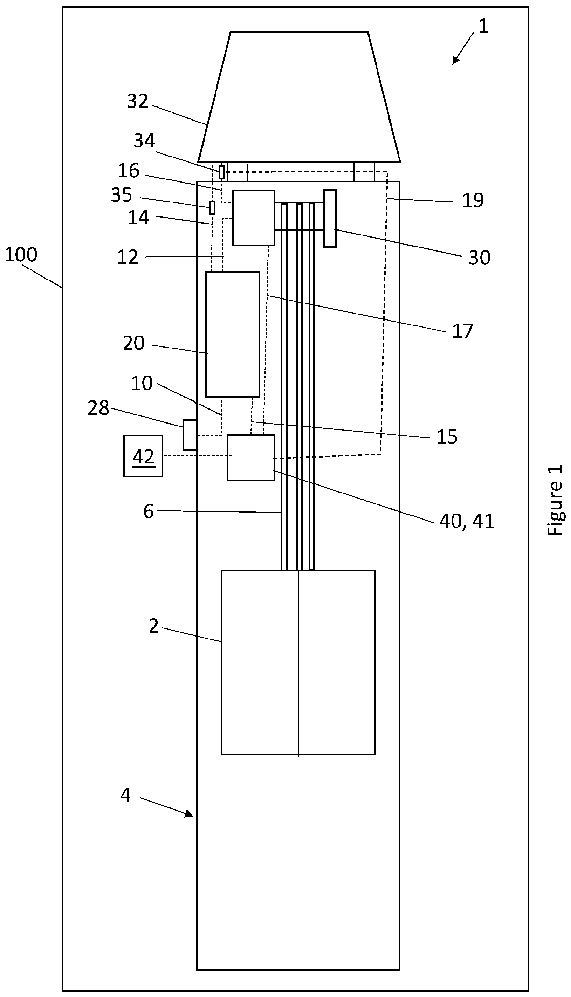

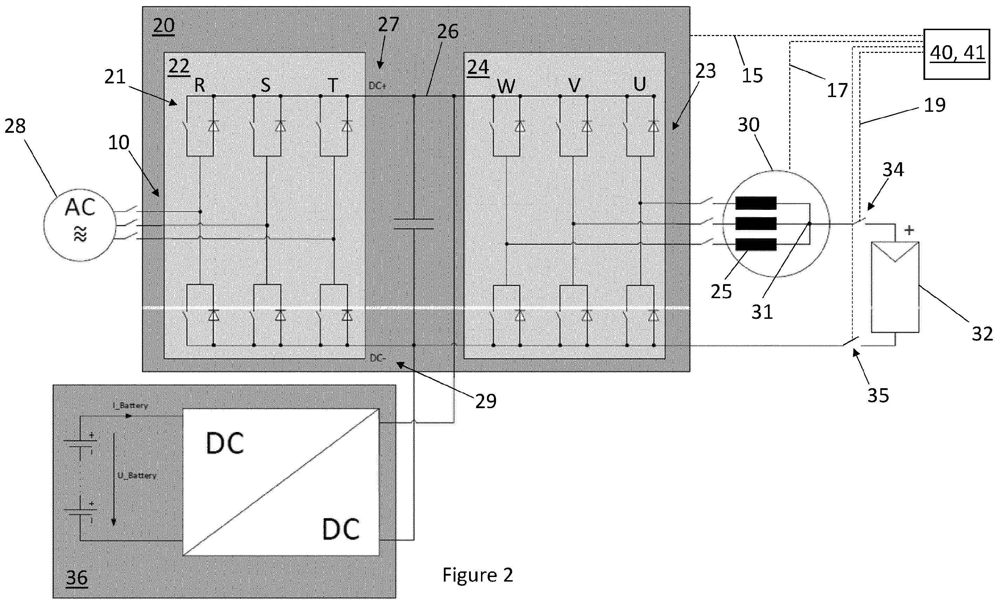

Figure 1 is a schematic diagram showing a conveyance system 1 according to an example of the present invention. The conveyance system 1 is located within a building 100. In this particular example the conveyance system 1 is an elevator system. The conveyance system 1 includes a conveyance apparatus 2, which in this example is an elevator car configured to travel upwards and downwards in a hoistway 4, moved by tension members 6, which may be, for example, belts or ropes. The tension members 6 are moved by a machine 30, under the control of a regenerative drive 20, discussed in greater detail below with reference to Figure 2. The regenerative drive 20 and the machine 30 are controlled by a drive controller 41, which receives signals from the main conveyance system controller 42. The signals from the main conveyance system controller 42 indicate how the conveyance system should be operated, e.g., they provide a car call to respond to. The regenerative drive 20 is operable as a machine drive and a regenerative drive capable of harvesting regenerative energy from the machine 30 during braking of a load being driven, which in this case is the conveyance apparatus 2.

The regenerative drive 20 receives power from a mains AC power source 28, through the wiring 10. It is then wired to the machine 30 by machine wiring 12. The regenerative drive 20 is also connected to an energy harvesting device 32 by wiring 14. In this example the energy harvesting device 32 is a solar panel, comprising a plurality of photovoltaic cells. The energy harvesting device 32 is connected to the machine 30 by wiring 16. The drive controller 41 is connected to both the regenerative drive 20, by wiring 15, and to the machine 30, by wiring 17. The drive controller 41 is also connected to switching arrangements 34, 35 via wiring 19. A first switching arrangement 34 is arranged between the machine 30 and the energy harvesting device 32. This arrangement is described in greater detail below with reference to Figure 2.

Figure 2 is a schematic diagram, showing the regenerative drive 20 of Figure 1 and its associated components in greater detail for a first example. The AC power source 28 can be, for example, an electrical main line. In the example of Figure 2 the regenerative drive system 20 is a regenerative drive that includes a converter 22 having 3 phase legs, R, S, and T. Each phase leg, R, S, and T, includes switching devices 21 controlled by control signals from a drive controller 41 (i.e., through wiring 15) to convert AC power to DC power on a DC bus 26 having a high side 27 and a low side 29. The regenerative drive system 20 also includes a machine control circuit, which in this example is an inverter 24 having 3 phase legs, W, V, and U. Each phase leg, W, V, and U, includes switching devices 23 controlled by control signals from the drive controller 41 to convert DC power across the DC bus 26 to AC drive signals to power the machine 30. By controlling the switching of the switching devices 21, 23 (and therefore the voltage supplied to the machine 30) the drive controller 41 controls operation of the machine 30, i.e., whether the machine is driven to rotate or not. The drive controller 41 can also control operation of a machine brake (not shown) (i.e., via wiring 17) connected to the machine 30, which can brake motion of the machine 30. The drive controller 41 may be implemented using a general-purpose microprocessor executing a computer program stored on a storage medium to perform the operations described herein. Alternatively, the drive controller 41 may be implemented in hardware (e.g., ASIC, FPGA) or in a combination of hardware/software.

The energy harvesting device 32 (in this example a solar panel) is selectively connectable to the inverter 24 by operation of the first switching arrangement 34 and the second switching arrangement 35. The second switching arrangement 35 is arranged between a negative pole of the energy harvesting device 32, and the low side 29 of the DC bus 26. The drive controller 41 in this example also provides a switching controller 40, that controls the first switching arrangement 34 and the second switching arrangement 35. In particular, the switching controller 40 sends signals to the switching arrangements 34, 35 (e.g., via wiring 19) to control the switching arrangements 34, 35 to switch between a first condition (as shown in Figure 2), in which the energy harvesting device 32 is disconnected from the inverter 24, and a second condition (not shown) in which the energy harvesting device 32 is operatively connected to the inverter 24. In particular, the energy harvesting device 32 is connected to the inverter 24 via the machine 30, and in particular it is connected to the star point 31 of the winding. The star point 31 is the position at which all three windings of the machine 30 meet, and at which the current is therefore the sum of the current on the three windings.

As stated above, in this example, the switching controller 40 is provided by the drive controller 41. The drive controller 41 also controls operation of the machine 30 and the regenerative drive 20, as described above, and therefore it has knowledge of the planned movement of the machine 30. The switching controller 40 can therefore control the switching arrangements 34, 35 to connect the energy harvesting device 32 to the inverter 24 when the machine 30 is stationary, since when the machine 30 is stationary the inverter 24 of the regenerative drive 20 is not in use for either powering or receiving power from the machine 30. As described above, the switching controller 40 may control the switching arrangements 34, 35 to switch only when the time in the second condition will be (or is predicted to be) sufficiently long to make the switching process worthwhile.

When the energy harvesting device 32 is not connected to the inverter (i.e., when the switching arrangement 34 is in the first condition) there is no current flow from the energy harvesting device 32 and therefore no power generation. The energy harvesting device 32 will simply generate an open-circuit voltage at its output clamps.

When the switching arrangements 34, 35 are switched into the second (closed) condition, and the energy harvesting device 32 connected to the inverter 24, harvested power from the energy harvesting device 32 can be sent to the AC power source 28 (e.g., to the mains grid) through the converter 22, or alternatively can be sent to a battery 36, which is connected to the DC link 26. The machine 30 includes inductors 25 connected on each phase of the machine 30. These act to control the current as current flows back from the energy harvesting device 32 to the DC link 26. Supplying the power back to the DC link 26 in this way also enables it to then easily be passed through the converter 22 to be returned to the AC power source 28, if required.

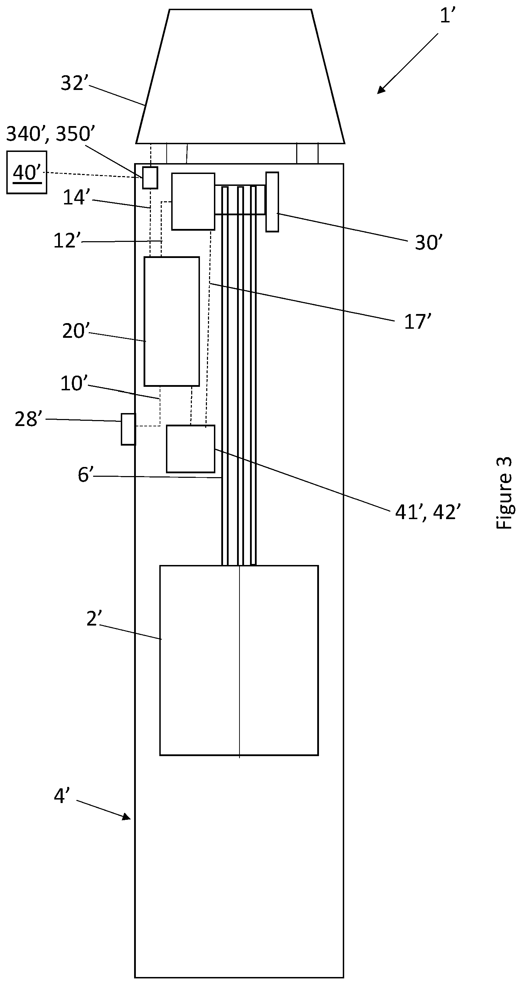

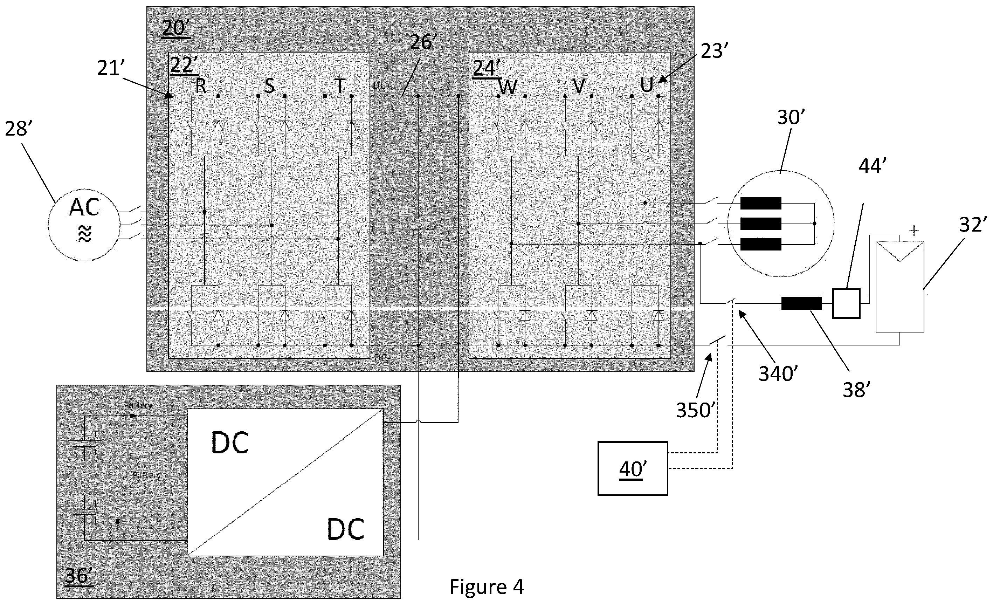

Figure 3 shows a conveyance apparatus 1' according to a second example of the present disclosure, and Figure 4 shows certain components of that conveyance apparatus 1' in greater detail. This example is largely very similar to that of Figures 1 and 2. Like components are labelled with the same reference numeral, but followed by an apostrophe " ' ", and will not be described in detail again. Only those components differing from the example of Figures 1 and 2 will be described in detail.

In this second example, the main conveyance system controller 42' provides the drive controller 41' that controls the regenerative drive 20' and the machine 30'. A separate switching controller 40' controls the switching arrangements 340', 350', which are described in greater detail with reference to Figure 4.

In contrast to the first example, in which the energy harvesting device is connected to the star point of the machine, in this second example, the energy harvesting device 32' is connected to the W phase of the inverter 24' (although it will be understood that any of the three phases W, V, U could be used). The switching arrangements 340', 350', under the control of switching controller 40', controls whether the energy harvesting device 32' is connected to the inverter 24', or disconnected, based on the condition of the switching arrangements 340', 350' (i.e., whether they are open or closed). The first switching arrangement 340' is located between the energy harvesting device 32' (specifically its positive pole) and the phase of the inverter 24' (i.e., in series between them). The second switching arrangement 350' is connected between the negative pole of the energy harvesting device 32' and the low side of the DC bus 26'. Also connected in series with the first switching arrangement is an inductor 38' and a voltage measurement device 44'. Measuring the voltage produced by the energy harvesting device 32' using the voltage measurement device 44' allows maximum power point tracking to be used in order to harvest the maximum available power from the energy harvesting device 32'.

The inductor 38' helps control the flow of current from the energy harvesting device.

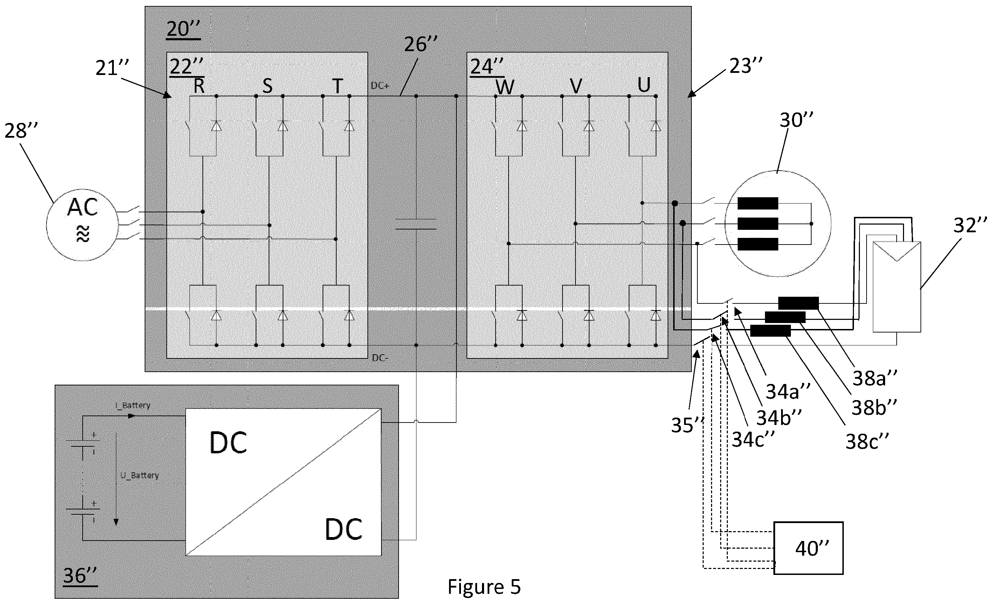

In some examples, particularly where a very large current is drawn from the energy harvesting device 32', it may be preferable that the energy harvesting device 32' is connected to more than one phase of the inverter 24', or even to every phase of the inverter 24'. Such an arrangement is illustrated in the third example, shown in Figure 5. Many components are alike with those shown in Figure 4, and will not be described in detail again. Like components are labelled with like reference numbers but followed by an additional apostrophe, compared to those used for the second example of Figures 3 and 4 (and therefore by two apostrophes compared to those used for the first example of Figures 1 and 2).

In this third example, instead of only one switching arrangement and inductor, as shown in Figure 4, there is now one such arrangement for each phase of the inverter 24". Thus, the conveyance system includes a first switching arrangement 34a", connected between one phase of the inverter 24" (W) and the energy harvesting device 32". A first inductor 38a" is connected between the switching arrangement 34a" and the energy harvesting device 32", i.e., in series with them. The conveyance system further includes a second switching arrangement 34b", connected between one phase of the inverter 24" (V) and the energy harvesting device 32". A second inductor 38b" is connected between the switching arrangement 34b" and the energy harvesting device 32". The conveyance system also includes a third switching arrangement 34c", connected between one phase of the inverter 24" (U) and the energy harvesting device 32". A third inductor 38c" is connected between the switching arrangement 34c" and the energy harvesting device 32". A fourth switching arrangement 350' is connected between the negative pole of the energy harvesting device 32' and the low side of the DC bus 26'.

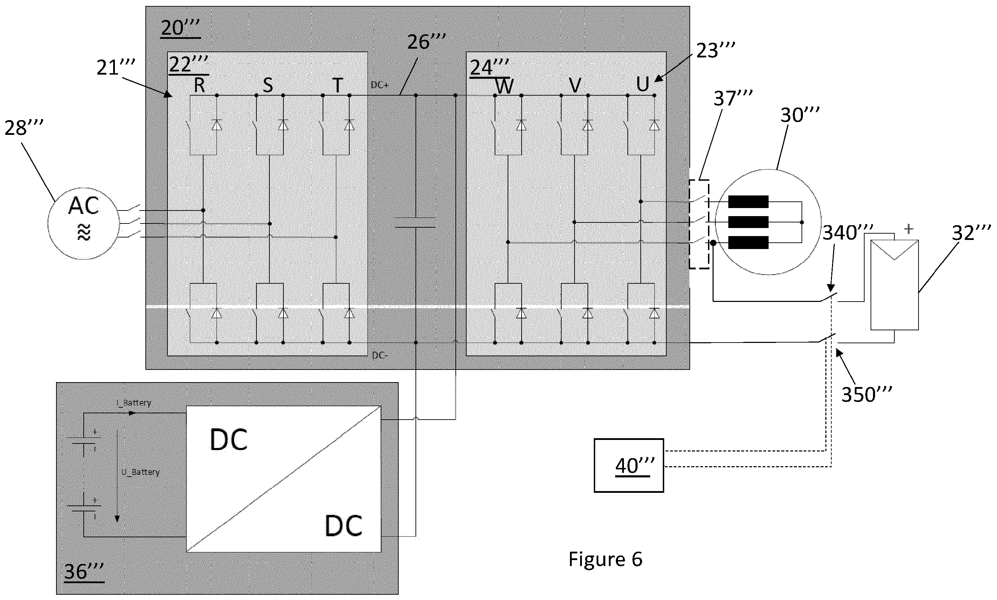

Figure 6 shows a fourth example. It is similar to that of Figures 4 and 5, since the positive pole of the energy harvesting device 32‴ is connected directly to a phase (W) of the inverter 24"', but in this arrangement no additional inductors are needed. Many components are alike with those shown in the preceding Figures, and will not be described in detail again. Like components are labelled with like reference numbers but followed by an additional apostrophe, compared to those used for the third example of Figure 5 (and therefore by two apostrophes compared to the second example of Figures 3 and 4 and by three apostrophes compared to those used for the first example of Figures 1 and 2).

In this example, the machine switches 37‴ connecting the three phases of the machine 30‴ to the three phases of the inverter 24‴ are individually switchable (which is not standard in such an arrangement). As a result, the switch on one of the phases V, U that the switching arrangement 340‴ is not connected to can be closed when the switching arrangements 340‴, 350‴ are closed. This causes two of the inductors of the machine 30‴ to be connected in series with the energy harvesting device 32‴. In this arrangement the inverter phase connected to the closed switch of the machine switches 37‴ (i.e., phase V or U), will be the only actively switching phase. This arrangement therefore allows the existing inductors of the machine 30‴ to be re-used during energy harvesting, so that additional inductors are not required.

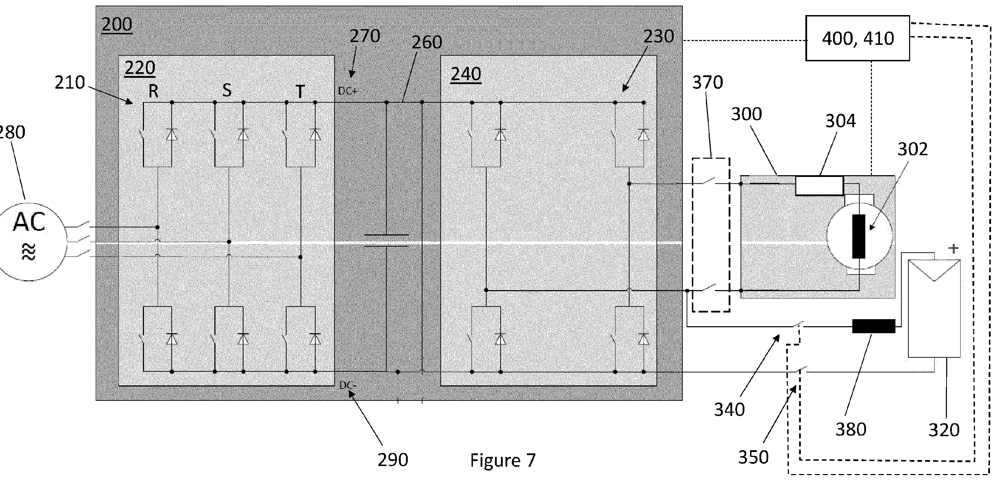

Figure 7 is a schematic diagram, showing a regenerative drive 200 and its associated components according to a fifth example of a first aspect of the present disclosure. The regenerative drive 200 includes a converter 220 having 3 phase legs, R, S, and T. Each phase leg, R, S, and T, includes switching devices 210 controlled by control signals from a drive controller 410 to convert AC power supplied by an AC power source 280 to DC power on a DC bus 260 having a high side 270 and a low side 290. The AC power source 280 can be, for example, an electrical main line.

The regenerative drive system 200 also includes a machine control circuit, which in this example is a DC drive 240. The DC drive 240 includes a plurality of switching devices 230, that are arranged to alter the voltage supplied on the DC bus 260 to control the voltage supplied to a DC machine 300. The DC machine includes a stator winding 302 and a rotor winding 304. Although shown as being in series connection with the stator winding 302, a rotor winding 304 may additionally or alternatively be arranged in parallel with the stator winding 302.

Thus, by controlling the switching of the switching devices 210, 230 the drive controller 410 controls operation of the machine 300, i.e., whether the machine is driven to rotate or not. The drive controller 410 can also control operation of a machine brake (not shown) connected to the machine 300, which can brake motion of the machine 300. The drive controller 410 may be implemented using a general-purpose microprocessor executing a computer program stored on a storage medium to perform the operations described herein. Alternatively, the drive controller 410 may be implemented in hardware (e.g., ASIC, FPGA) or in a combination of hardware/software.

An energy harvesting device 320 is connected to the DC drive 240 by a first switching arrangement 340, arranged between the positive pole of the energy harvesting device 320 and a set of the switching devices 230, and by a second switching arrangement 350, arranged between the negative pole of the energy harvesting device 320 and the low side 290 of the DC bus 260. Each set of the switching devices 230 (i.e., each vertical branch) can be considered as a phase of the DC drive 240. The energy harvesting device 320 (which in this example is a solar panel) is selectively connectable to the DC drive 240 by operation of the first switching arrangement 340 and the second switching arrangement 350. The drive controller 410 in this example also provides a switching controller 400, that controls the first switching arrangement 340 and the second switching arrangement 350. In particular, the switching controller 400 sends signals to the switching arrangements 340, 350 to control the switching arrangements 340, 350 to switch between a first condition (as shown in Figure 7), in which the energy harvesting device 320 is disconnected from the DC drive 240, and a second condition (not shown) in which the energy harvesting device 320 is operatively connected to the DC drive 240, allowing power from the energy harvesting device 320 to be transferred back through the DC drive 240, and the converter 220 to the AC power source 280.

In this example, an additional inductor 380 is provided, between the positive node of the energy harvesting device 320 and the set of switching devices. However, alternatively, no additional inductor need be provided where the machine switches 370 are individually controllable, following a similar principle to that described above with reference to Figure 6.

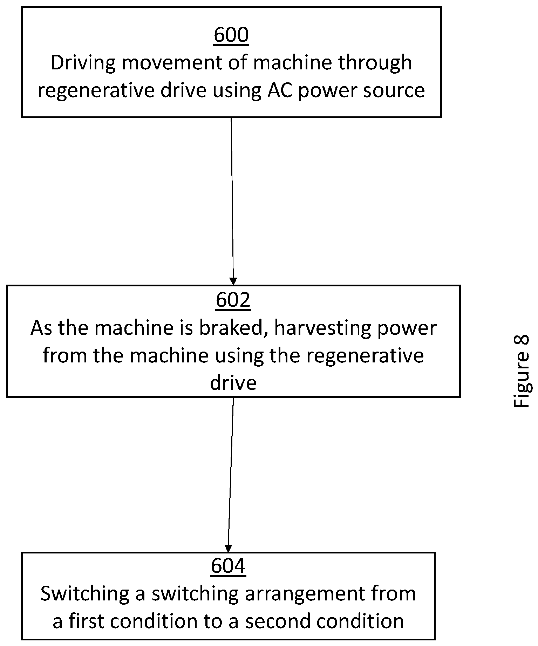

A method according to a second aspect of the present invention is illustrated in Figure 8. In a first step, 600, movement of the machine of the conveyance system is driven using with power from the alternating current (AC) power source using the regenerative drive. Next, at step 602, power is harvested from the machine using the regenerative drive as the motion of the machine is being braked. Then, at step 604, a switching arrangement is switched from a first condition, in which an energy harvesting device is disconnected from the inverter of the regenerative drive, to a second condition in which the energy harvesting device is operatively connected to at least one phase of the inverter of the regenerative drive. Step 604 may take place when the machine is stationary.

It will be appreciated by those skilled in the art that the invention has been illustrated by describing one or more specific aspects thereof, but is not limited to these aspects; many variations and modifications are possible, within the scope of the accompanying claims.

## Claims

1. A conveyance system (1), comprising:
an alternating current (AC) power source (28);
an alternating current (AC) machine (30) for moving a conveyance apparatus (2);
a regenerative drive (20), wherein the machine (30) is connected to the AC power source (28) by the regenerative drive (20), the regenerative drive (20) comprising:
a direct current (DC) bus (26);
a converter (22), comprising a first plurality of switching devices (21) in selective communication with each phase of the AC power source (28) and with the DC bus (26); and
a machine control circuit (24), comprising a second plurality of switching devices (23) in selective communication with each phase of the machine (30) and with the DC bus (26), wherein the machine control circuit is an inverter;
the conveyance system further comprising:
an energy harvesting device (32), which allows energy to be extracted from the external environment; and
a switching arrangement (34), arranged between the energy harvesting device (32) and the inverter (24), wherein the switching arrangement (34is switchable between a first condition, in which the energy harvesting device (32) is disconnected from the inverter (24), and a second condition in which the energy harvesting device (32) is operatively connected to at least one switching device of the second plurality of switching devices (23) of the inverter (24);
**characterised in that** the machine (30) comprises a star point (31), at which all phases of the machine (30) meet, wherein the star point (31) is arranged to be accessible from an exterior of the machine (30), and wherein the switching arrangement (34) is connected to the star point (31).

2. The conveyance system (1) of claim 1, further comprising a switching controller (40), arranged to control the switching arrangement (34) to switch between the first condition and the second condition.

3. The conveyance system (1) of claim 2, wherein the switching controller (40) is arranged to switch the switching arrangement (34) to the second condition when the machine (30) is stationary.

4. The conveyance system (1) of claim 2 or 3, comprising a drive controller (41) arranged to control switching of the first plurality of switching devices (21) and the second plurality of switching devices (23) so as to control the machine (30), wherein the drive controller (41) comprises the switching controller (40).

5. The conveyance system (1) of any preceding claim, further comprising a voltage measurement device (44'), connected to the energy harvesting device (32') and arranged to measure the voltage produced by the energy harvesting device (32').

6. The conveyance system (1) of any preceding claim, wherein the conveyance system (1) is an elevator system.

7. A building (100), comprising the conveyance system (1) of any preceding claim, wherein the building (100) is a residential building, or an office building, or a commercial building.

8. A method of operating a regenerative drive (20) of a conveyance system (1), the regenerative drive (20) comprising a direct current (DC) bus (26), a converter (22) comprising a first plurality of switching devices (21) in selective communication with each phase of an AC power source (28) and with the DC bus (26), and a machine control circuit (24) comprising a second plurality of switching devices (23) in selective communication with each phase of a machine (30) and with the DC bus (26), wherein the machine control circuit (24) is an inverter, the method comprising:
driving movement of the machine (30) with power from the AC power source (28) using the regenerative drive (20), wherein the machine (30) is arranged to move a conveyance apparatus (2) of the conveyance system (1);
when motion of the machine (30) is being braked, harvesting power from the machine (30) using the regenerative drive (20);
switching a switching arrangement (34) from a first condition, in which an energy harvesting device (32) is disconnected from the inverter (24) of the regenerative drive (20), to a second condition in which the energy harvesting device (32) is operatively connected to at least one switching device of the second plurality of switching devices (23) of the inverter (24), the energy harvesting device (32) allowing energy to be extracted from the external environment;
wherein the machine (30) comprises a star point (31), at which all phases of the machine (30) meet, wherein the star point (31) is arranged to be accessible from an exterior of the machine (30), and wherein the switching arrangement (34) is connected to the star point (31).

9. The method of claim 8, further comprising:
transferring power harvested from the energy harvesting device (32) when the machine (30) is stationary to the AC power source (28), through the converter (22); and/or
transferring power harvested from the energy harvesting device (32) when the machine (30) is stationary to a battery (36) connected to the DC bus (26).

10. A software product which, when implemented on a controller (40) of a conveyance system (1), causes the controller (40) to carry out the method as claimed in claim 8 or 9.

## Patentansprüche

1. Fördersystem (1), umfassend:
eine Leistungsquelle (28) für Wechselstrom (alternating current - AC);
eine Maschine (30) mit Wechselstrom (AC) zum Bewegen einer Fördereinrichtung (2);
einen regenerativen Antrieb (20), wobei die Maschine (30) durch den regenerativen Antrieb (20) mit der AC-Leistungsquelle (28) verbunden ist, wobei der regenerative Antrieb (20) Folgendes umfasst:
einen Bus (26) für Gleichstrom (direct current - DC);
einen Wandler (22), umfassend eine erste Vielzahl von Schaltvorrichtungen (21) in selektiver Kommunikation mit jeder Phase der AC-Leistungsquelle (28) und mit dem DC-Bus (26); und
eine Maschinensteuerschaltung (24), umfassend eine zweite Vielzahl von Schaltvorrichtungen (23) in selektiver Kommunikation mit jeder Phase der Maschine (30) und mit dem DC-Bus (26), wobei die Maschinensteuerschaltung ein Wechselrichter ist;
wobei das Fördersystem ferner Folgendes umfasst:
eine Energiegewinnungsvorrichtung (32), die es ermöglicht, Energie aus der Außenumgebung zu entnehmen; und
eine Schaltanordnung (34), die zwischen der Energiegewinnungsvorrichtung (32) und dem Wechselrichter (24) angeordnet ist, wobei die Schaltanordnung (34) zwischen einem ersten Zustand, in dem die Energiegewinnungsvorrichtung (32) von dem Wechselrichter (24) getrennt ist, und einem zweiten Zustand,
in dem die Energiegewinnungsvorrichtung (32) mit mindestens einer Schaltvorrichtung der zweiten Vielzahl von Schaltvorrichtungen (23) des Wechselrichters (24) wirkverbunden ist, umschaltbar ist;
**dadurch gekennzeichnet, dass** die Maschine (30) einen Sternpunkt (31) umfasst, an dem alle Phasen der Maschine (30) zusammenlaufen, wobei der Sternpunkt (31) so angeordnet ist,
dass er von einer Außenseite der Maschine (30) zugänglich ist und wobei die Schaltanordnung (34) mit dem Sternpunkt (31) verbunden ist.

2. Fördersystem (1) nach Anspruch 1, ferner umfassend eine Schaltsteuerung (40), die angeordnet ist, um die Schaltanordnung (34) zu steuern, um sie zwischen dem ersten Zustand und dem zweiten Zustand umzuschalten.

3. Fördersystem (1) nach Anspruch 2, wobei die Schaltsteuerung (40) angeordnet ist, um die Schaltanordnung (34) in den zweiten Zustand zu schalten, wenn die Maschine (30) stillsteht.

4. Fördersystem (1) nach Anspruch 2 oder 3, umfassend eine Antriebssteuerung (41), die angeordnet ist, um das Umschalten der ersten Vielzahl von Schaltvorrichtungen (21) und der zweiten Vielzahl von Schaltvorrichtungen (23) zu steuern, um die Maschine (30) zu steuern, wobei die Antriebssteuerung (41) die Schaltsteuerung (40) umfasst.

5. Fördersystem (1) nach einem der vorhergehenden Ansprüche, ferner umfassend eine Spannungsmessvorrichtung (44'), die mit der Energiegewinnungsvorrichtung (32') verbunden und angeordnet ist, um die durch die Energiegewinnungsvorrichtung (32') erzeugte Spannung zu messen.

6. Fördersystem (1) nach einem der vorhergehenden Ansprüche, wobei das Fördersystem (1) ein Aufzugsystem ist.

7. Gebäude (100), umfassend das Fördersystem (1) nach einem der vorhergehenden Ansprüche, wobei das Gebäude (100) ein Wohngebäude oder ein Bürogebäude oder ein Geschäftsgebäude ist.

8. Verfahren zum Betreiben eines regenerativen Antriebs (20) eines Fördersystems (1), wobei der regenerative Antrieb (20) einen Bus (26) für Gleichstrom (DC), einen Wandler (22), umfassend eine erste Vielzahl von Schaltvorrichtungen (21) in selektiver Kommunikation mit jeder Phase einer AC-Leistungsquelle (28) und mit dem DC-Bus (26) und eine Maschinensteuerschaltung (24), umfassend eine zweite Vielzahl von Schaltvorrichtungen (23) in selektiver Kommunikation mit jeder Phase einer Maschine (30) und mit dem DC-Bus (26), umfasst, wobei die Maschinensteuerschaltung (24) ein Wechselrichter ist, wobei das Verfahren Folgendes umfasst:
Antreiben der Bewegung der Maschine (30) mit Leistung aus der AC-Leistungsquelle (28) unter Verwendung des regenerativen Antriebs (20), wobei die Maschine (30) angeordnet ist, um eine Fördereinrichtung (2) des Fördersystems (1) zu bewegen;
Gewinnen von Leistung aus der Maschine (30) unter Verwendung des regenerativen Antriebs (20), wenn die Bewegung der Maschine (30) gebremst wird;
Umschalten einer Schaltanordnung (34) von einem ersten Zustand, in dem eine Energiegewinnungsvorrichtung (32) von dem Wechselrichter (24) des regenerativen Antriebs (20) getrennt ist, in einen zweiten Zustand, in dem die Energiegewinnungsvorrichtung (32) mit mindestens einer Schaltvorrichtung der zweiten Vielzahl von Schaltvorrichtungen (23) des Wechselrichters (24) wirkverbunden ist, wobei die Energiegewinnungsvorrichtung (32) ermöglicht, dass Energie aus der Außenumgebung entnommen wird;
wobei die Maschine (30) einen Sternpunkt (31) umfasst, an dem alle Phasen der Maschine (30) zusammenlaufen, wobei der Sternpunkt (31) so angeordnet ist, dass er von einer Außenseite der Maschine (30) zugänglich ist und wobei die Schaltanordnung (34) mit dem Sternpunkt (31) verbunden ist.

9. Verfahren nach Anspruch 8, ferner umfassend:
Übertragen von Leistung, die von der Energiegewinnungsvorrichtung (32) gewonnen wird, wenn die Maschine (30) stillsteht, über den Wandler (22) an die AC-Leistungsquelle (28); und/oder
Übertragen von Leistung, die von der Energiegewinnungsvorrichtung (32) gewonnen wird, wenn die Maschine (30) stillsteht, an eine Batterie (36), die mit dem DC-Bus (26) verbunden ist.

10. Softwareprodukt, das, wenn es auf einer Steuerung (40) eines Fördersystems (1) implementiert wird, bewirkt, dass die Steuerung (40) das in Anspruch 8 oder 9 beanspruchte Verfahren durchführt.

## Revendications

1. Système de transport (1), comprenant :
une source d'alimentation en courant alternatif (AC) (28) ;
une machine à courant alternatif (AC) (30) pour déplacer un appareil de transport (2) ;
un entraînement régénératif (20), dans lequel la machine (30) est connectée à la source d'alimentation AC (28) par l'entraînement régénératif (20), l'entraînement régénératif (20) comprenant :
un bus à courant continu (DC) (26) ;
un convertisseur (22), comprenant une première pluralité de dispositifs de commutation (21) en communication sélective avec chaque phase de la source d'alimentation AC (28) et avec le bus DC (26) ; et
un circuit de commande de machine (24), comprenant une seconde pluralité de dispositifs de commutation (23) en communication sélective avec chaque phase de la machine (30) et avec le bus DC (26), le circuit de commande de machine étant un onduleur ;
le système de transport comprenant en outre :
un dispositif de récupération énergique (32), permettant d'extraire de l'énergie depuis l'environnement extérieur ; et
une structure de commutation (34), disposée entre le dispositif de récupération énergique (32) et l'onduleur (24), la structure de commutation (34) étant commutable entre une première condition, dans laquelle le dispositif de récupération énergique (32) est déconnecté de l'onduleur (24), et une seconde condition dans laquelle le dispositif de récupération énergique (32) est connecté de manière opérationnelle à au moins un dispositif de commutation de la seconde pluralité de dispositifs de commutation (23) de l'onduleur (24) ;
**caractérisé en ce que** la machine (30) comprend un point étoile (31), auquel se rejoignent toutes les phases de la machine (30), le point étoile (31) est disposé pour être accessible depuis un extérieur de la machine (30), et la structure de commutation (34) est connectée au point étoile (31).

2. Système de transport (1) selon la revendication 1, comprenant en outre un contrôleur de commutation (40), disposé pour commander la structure de commutation (34) à se commuter entre la première condition et la seconde condition.

3. Système de transport (1) selon la revendication 2, dans lequel le contrôleur de commutation (40) est configuré pour commuter la structure de commutation (34) à la seconde condition lorsque la machine (30) est à l'arrêt.

4. Système de transport (1) selon la revendication 2 ou 3, comprenant un contrôleur d'entraînement (41) disposé pour commander la commutation de la première pluralité de dispositifs de commutation (21) et de la seconde pluralité de dispositifs de commutation (23) afin de commander la machine (30), le contrôleur d'entraînement (41) comprenant le contrôleur de commutation (40).

5. Système de transport (1) selon une quelconque revendication précédente, comprenant en outre un dispositif de mesure de tension (44'), connecté au dispositif de récupération énergique (32') et disposé pour mesurer la tension produite par le dispositif de récupération énergique (32').

6. Système de transport (1) selon une quelconque revendication précédente, dans lequel le système de transport (1) est un système d'ascenseur.

7. Bâtiment (100), comprenant le système de transfert (1) selon une quelconque revendication précédente, dans lequel le bâtiment (100) est un bâtiment résidentiel, un immeuble de bureaux ou un bâtiment commercial.

8. Procédé de faire fonctionner un entraînement régénératif (20) d'un système de transport (1), l'entraînement régénératif (20) comprenant un bus à courant continu (DC) (26), un convertisseur (22) comprenant une première pluralité de dispositifs de commutation (21) en communication sélective avec chaque phase d'une source d'alimentation AC (28) et avec le bus DC (26), et un circuit de commande de machine (24) comprenant une seconde pluralité de dispositifs de commutation (23) en communication sélective avec chaque phase d'une machine (30) et avec le bus DC (26), le circuit de commande de machine (24) étant un onduleur et le procédé comprenant :
entraîner la machine (30) à effectuer un mouvement avec l'énergie provenant de la source d'alimentation AC (28) en utilisant l'entraînement régénératif (20), la machine (30) étant disposée pour déplacer un appareil de transport (2) du système de transport (1) ;
lorsque l'action de la machine (30) est freinée, récupérer de l'énergie depuis la machine (30) en utilisant l'entraînement régénératif (20) ;
commuter une structure de commutation (34) d'une première condition, dans laquelle le dispositif de récupération énergique (32) est déconnecté de l'onduleur (24) de l'entraînement régénératif (20), à une seconde condition dans laquelle le dispositif de récupération énergique (32) est connecté de manière opérationnelle à au moins un dispositif de commutation de la seconde pluralité de dispositifs de commutation (23) de l'onduleur (24), le dispositif de récupération énergique (32) permettant d'extraire de l'énergie depuis l'environnement extérieur ;
dans lequel la machine (30) comprend un point étoile (31), auquel se rejoignent toutes les phases de la machine (30), le point étoile (31) est disposé pour être accessible depuis un extérieur de la machine (30), et la structure de commutation (34) est connectée au point étoile (31).

9. Procédé selon la revendication 8, comprenant en outre :
transférer de l'énergie récoltée depuis le dispositif de récupération énergique (32) lorsque la machine (30) est à l'arrêt vers la source d'alimentation AC (28), par l'intermédiaire du convertisseur (22) ; et/ou
transférer de l'énergie récoltée depuis le dispositif de récupération énergique (32) lorsque la machine (30) est à l'arrêt vers une batterie (36) connectée au bus DC (26).

10. Produit logiciel, qui, lorsqu'il est mis en œuvre sur un contrôleur (40) d'un système de transport (1), amène le contrôleur (40) à exécuter le procédé selon la revendication 8 ou 9.
